# EUROPÄISCHE PATENTSCHRIFT

(11) **EP 2 489 951 B1**
(45) Veröffentlichungstag und Bekanntmachung des Hinweises auf die Patenterteilung: **05.04.2017**
(21) Anmeldenummer: 11155252.7
(22) Anmeldetag: 21.02.2011
(51) Int. Cl.: F24H 1/10, F24H 1/12, F24H 1/14, F24H 9/20, G01F 1/115

(54) **Elektrischer Durchlauferhitzer**
Electric continuous-flow heater
Chauffe-eau instantané électrique

(43) Veröffentlichungstag der Anmeldung: 22.08.2012
(73) Patentinhaber: Gerdes OHG, 21337 Lüneburg (DE)
(72) Erfinder: Beck, Klaus, 22946 Trittau (DE)
(74) Vertreter: Stork Bamberger Patentanwälte PartmbB

(56) Entgegenhaltungen:
- EP-A1- 1 528 371
- EP-A2- 1 693 651
- DE-A1- 10 111 993
- DE-U1- 20 005 327
- US-A1- 2008 107 410
- US-B1- 6 487 919

## Beschreibung

Die Erfindung betrifft einen elektrischen Durchlauferhitzer, umfassend einen ersten Endkanal, nämlich einen Wasserzulaufkanal, mit einem inneren Kanalende und einem in einer ersten äußeren Kanalöffnung mündenden äußeren Kanalende, ein erstes Leitungsanschlussstück, das in lösbarer Dichtverbindung in der ersten äußeren Kanalöffnung sitzt und zum Anschluss an eine erste äußere, Wasser zuführende Wasserleitung eingerichtet ist, einen zweiten Endkanal, nämlich einen Wasserablaufkanal, mit einem inneren Kanalende und einem in einer zweiten äußeren Kanalöffnung mündenden äußeren Kanalende, ein zweites Leitungsanschlussstück , das in lösbarer Dichtverbindung in der zweiten äußeren Kanalöffnung sitzt und zum Anschluss an eine zweite äußere, Wasser aufnehmende Wasserleitung eingerichtet ist, eine Kanalanordnung von wasserführenden Kanälen zwischen den inneren Kanalenden der Endkanäle, eine zum Erwärmen von durch die Kanalanordnung fließendem Wasser eingerichtete elektrische Heizeinrichtung, eine elektrische Steuereinrichtung zum Regeln der Temperatur der Heizeinrichtung und eine Durchflussmesseinrichtung, die eine der Heizeinrichtung zugeführte Wassermenge erfasst und die elektrische Steuereinrichtung mit einem nach Maßgabe der Durchflussmenge bewirkten Durchflusssteuersignal beaufschlagt, wobei die Durchflussmesseinrichtung einen in den Wasserweg der Kanäle eingefügten Durchflussmesser und einen auf den Durchflussmesser berührungs- und kontaktlos ansprechenden, das Durchflusssteuersignal abgebenden Signalgeber umfasst.

Elektronisch gesteuerte Wasser-Durchlauferhitzer benötigen zur genauen Temperaturregelung eine Wassermengenerkennung. Üblicherweise wird ein Durchflusssteuersignal erzeugt, das sich entsprechend der Wasserdurchflussmenge ändert. Das Durchflusssteuersignal wird an eine elektronische Steuereinrichtung gegeben, die mit Hard- und/oder Software des Durchlauferhitzers ausgestattet ist, um die Temperatur der Heizeinrichtung zu regeln. Ein in dem Wasserweg des Durchlauferhitzers angeordneter Durchflussmesser kann, zum Beispiel aufgrund von Verschleiß und/oder einer Blockade eines bewegten Teils oder eines mechanischen oder elektrischen Einflusses, in seiner Funktion gestört sein. Der Durchflussmesser muss dann gereinigt oder ausgetauscht werden, um die Funktion des Durchlauferhitzers wieder herzustellen.

Es sind unterschiedliche Anordnungen zum Anbringen eines Durchflussmessers in einem Durchlauferhitzer bekannt. Eine Maßnahme besteht darin, dass am Umfang einer Rohrleitung oder eines Kanals eine Öffnung vorgesehen ist, durch die ein mit einem Dichtverschluss ausgestatteter Durchflussmesser in den Wasserweg gesetzt wird. Zum Beispiel wird in dem Heizblock eines Durchlauferhitzers die seitliche Wand eines Rohres mit einer besonderen Öffnung versehen, in der ein Durchflussmesser mit einem dichtenden Drehverschluss angeordnet ist (DE 10 2007 060 190 A1). Eine andere Maßnahme besteht darin, dass in einem Durchlauferhitzer eine Wasser führende Rohr- oder Kanalleitung aufgetrennt und die Trennstelle mit einem Durchflussmesser überbrückt wird. Die Installation eines solchen Durchflussmessers erfordert zwei besondere Dichtanschlüsse zwischen dem Durchflussmesser und den Öffnungen des unterbrochenen Wasserkanals. Die Anschlüsse werden zum Beispiel durch abzudichtende Flansch- oder Flansch/Stutzen-Verbindungen hergestellt (DE 20 2004 012 263 U1).

EP 1 528 371 offenbart ein weiteres Beispiel Die bekannten Maßnahmen erfordern in jedem Fall besondere Dichtflächen des in einem Wasserweg angeordneten Durchflussmessers, um ihn gegen Wasser und Druck abzudichten. Damit ist Montageaufwand verbunden. Nicht nur auf Flüssigkeitsdichtheit, sondern auch auf Druckdichtheit beanspruchte Dichtungen sind mit zunehmender Betriebsdauer für Leckage anfällig. Die Mehrfachanordnung von Dichtungen erhöht die Verschleißanfälligkeit, und zumeist sind vorhandene Dichtungen zur Installation von neuen oder gereinigten Durchflussmessern nicht nutzbar und infolgedessen zu ersetzen.

Ziele der Erfindung bestehen darin, den Durchlauferhitzer hinsichtlich der Anordnung eines leicht einsetzbaren und entnehmbaren, insbesondere austauschbaren Durchflussmessers zu verbessern. Insbesondere sollen Montageaufwand und Störanfälligkeit reduziert, Baugrößen verkleinert sowie Abdichtung wesentlich vereinfacht werden.

Ziele der Erfindungen werden in Verbindung mit den Merkmalen des eingangs genannten elektrischen Durchlauferhitzers dadurch erreicht, dass der Durchflussmesser als Durchflussmesser-Einschubteil ausgebildet ist, dass in wenigstens einem der beiden Endkanäle ein Durchflussmesser-Einschubraum ausgebildet ist, der zur vollständigen Aufnahme des Durchflussmesser-Einschubteils eingerichtet ist, wobei das Durchflussmesser-Einschubteil ausschließlich von dem äußeren Kanalende her bei entnommenem Leitungsanschlussstück durch die äußere Kanalöffnung in den Endkanal einführbar ist, und dass das Durchflussmesser-Einschubteil in den Einschubraum in lösbarem Sitz eingefügt ist, wobei es in Reihe mit dem im Dichtsitz befindlichen, aus der äußeren Kanalöffnung entnehmbaren Leitungsanschlussstück angeordnet ist.

Mit der Erfindung gelingt es auf überraschend einfache Weise, dass besondere Dichtungen und/oder Dichtflächen zum Anordnen und Austauschen des Durchflussmessers entfallen. Es werden Dichtverbindungen von Leitungsanschlusstücken genutzt, die an der Außenseite des Durchlauferhitzers ohnehin zum Anschluss von äußeren Wasserleitungen vorhanden sind. Zusätzliche Dichtstellen oder -maßnahmen für den Durchflussmesser entfallen. Der Durchflussmesser kann besonders raumsparend angeordnet, einfach gereinigt oder ausgetauscht werden. Montage und Demontage erfolgen zeitsparend und kostengünstig. Solche Vorteile erreicht man dadurch, dass der Durchflussmesser vollständig in den Endkanal und zwar entnehmbar in den Durchflussmesser-Einschubraum eingefügt ist. Unter Endkanal ist die Kanalleitung zu verstehen, mit der das Kanalsystem des Durchlauferhitzers an seiner Außenseite zum Anschließen einer Wasser zuführenden bzw. abnehmenden äußeren Wasserleitung offen ist. Demgemäß wird als äußeres Leitungsanschlussstück jedes an einer Außenseite des Durchlauferhitzers frei zugängliche Anschlusselement bezeichnet, das mit Dichtfläche bzw. Dichtung ausgestattet ist und zum Beispiel drehbar, steckbar, rastbar, schraubbar oder sonstwie mittels mechanischer Verbindung mit dem äußeren Kanalende bzw. dessen äußerer Kanalöffnung lösbar verbunden ist. Der Durchflussmesser selbst baut einfach ohne besonderes zusätzliches Dichtmittel. Das Kanalsystem bleibt einfach, nämlich ohne zusätzliche, zu dichtende Trenn- oder Anschlussstellen. Bei abgenommenem oder noch nicht montiertem Leitungsanschlussstück lässt sich der Durchflussmesser einfach ohne besonderen Montageaufwand in den Einschubraum einschieben bzw. diesem entnehmen. Nach Anbringung des an sich vorhandenen Leitungsanschlussstücks ist die Aufnahme des Durchflussmessers in dem Einschubraum gesichert. Gegebenenfalls können zum Austausch oder Reinigen eines Durchflussmessers Leitungsanschlussstücke ausgetauscht werden, die kostengünstig und als einfache Massenbauteile zur Verfügung stehen.

Eine Ausgestaltung besteht darin, dass das in Reihenanordnung mit dem Durchflussmesser-Einschubteil befindliche Leitungsanschlussstück einen in den zugehörigen Endkanal einfassenden Dichtfuß mit fußseitigem Ende aufweist und dass der Durchflussmesser-Einschubraum durch einen Raum gebildet ist, der in Kanallängsrichtung durch den Rand einer zu dem inneren Kanalende des Endkanals gehörenden Mündung und durch das fußseitige Ende des Dichtfußes begrenzt ist. Man erreicht eine besondere Sicherung des Sitzes des Durchflussmessers in dem Endkanal. Die Länge des Durchflussmesser-Einschubraums zwischen dem fußseitigen Ende des Dichtfußes und dem Rand der Mündung kann entsprechend der Länge des Durchflussmesser-Einschubteils ausgebildet sein. Zweckmäßig ist die Dimensionierung derart, dass der Durchflussmesser auf Stoß gegen den Mündungsrand des inneren Kanalendes sowie gegen das fußseitige Ende des Dichtfußes sitzt. Die Stelle, an der der Durchflussmesser an das Leitungsanschlussstück angrenzt, erfordert keine zusätzlichen Dichtmaßnahmen. Dadurch ist die entnehmbare Anordnung des Durchflussmessers in seinem Einschubraum begünstigt. Der Durchflussmesser kann auf Passung, aber auch mit zur Entnahme Spiel belassendem Abstand zur Innenwand des Endkanals eingefügt sein.

Eine bevorzugte Gestaltung besteht darin, dass die den wenigstens einen Durchflussmesser-Einschubraum aufweisenden Endkanäle monolithisch mit den Kanälen der Kanalanordnung in einem monolithischen Grundkörper ausgebildet sind und dass der Grundkörper einen die Kanalanordnung umfassenden ersten Grundkörperteil und einen die Endkanäle mit dem wenigstens einen Durchflussmesser-Einschubraum umfassenden zweiten Grundkörperteil aufweist, wobei mittels der beiden Grundkörperteile der Anordnungsbereich der Kanalanordnung und der Anordnungsbereich der Endkanäle räumlich voneinander getrennt, nämlich zumindest zum größten Teil in unterschiedlichen, überlappungsfreien Raumbereichen angeordnet sind. Der zweckmäßig als Kunststoffspritzteil hergestellte Grundkörper ist ein einstückiger Montagekörper, in den das Kanalsystem des Durchlauferhitzers, nämlich die Endkanäle und die diese verbindenden Kanäle der Kanalanordnung einstückig eingearbeitet sind. Das heißt, dass die Endkanäle an ihren inneren Kanalenden einstückig jeweils in einen Kanal der Kanalanordnung übergehen. Die Kanäle der Kanalanordnung erstrecken sich insbesondere parallel in dichter Packung. In diesem Sinn ist die Kanalanordnung einstückiger Bestandteil des Grundkörpers. Die Kanalanordnung kann lediglich durch Kanalkappen ergänzt sein, die Öffnungsenden der Kanäle dichtend abdecken und jeweils zwischen zwei insbesondere benachbarten Öffnungsenden eine 180°-Umlenkung ausbilden. Eine Ausgestaltung der Raumtrennung der Kanäle voneinander besteht darin, dass die Endkanäle senkrecht zu den Kanälen der Kanalanordnung gerichtet sind. Vorzugsweise erstrecken sich die Kanäle der Kanalanordnung in einer über den Grundkörper durchgehenden Länge parallel zueinander. Allgemein, d.h. auch ohne das monolithische Kanalsystem und/oder ohne die genannte Unterteilung in Kanalbereiche, besteht eine bevorzugte Gestaltung darin, dass wenigstens der den Einschubraum aufweisende Endkanal an seinem inneren Ende in einen zu dem Endkanal quer, vorzugsweise senkrecht gerichteten Kanal übergeht. Zweckmäßig wird der Übergang zur räumlichen und/oder mechanischen Begrenzung des Einschubraums ausgebildet.

Die räumliche Trennung der Endkanäle und der Kanalanordnung hat den besonderen Vorteil, dass sich die Endkanäle und die anderen Kanäle innerhalb des Grundkörpers nicht oder allenfalls nur an einer Grundkörperseite überschneiden, wobei den Endkanälen Wände, insbesondere nämlich Plattenelemente oder plattenartige Stege, des Grundkörpers zugeordnet sind, die im Bereich der Endkanäle weitgehend freien Montageraum ausbilden. An derartig freien Montageraum grenzt der Durchflussmesser-Einschubraum an mit dem Vorteil, dass in dem Montageraum besonders günstig eine vorteilhaft einstückig in den Grundkörper integrierte Aufnahme für einen Signalgeber angeordnet werden kann, der ein durch die Kanalwandung hindurchwirkendes Messsignal des Durchflussmessers erfasst.

Eine Ausgestaltung, mit der im Bereich des Durchflussmesser-Einschubraums außen am Endkanal Montageraum gewonnen wird, besteht bereits darin, dass der wenigstens eine den Durchflussmesser-Einschubraum aufweisende Endkanal monolithisch mit einem Plattenelement eines Grundkörpers des Durchlauferhitzers geformt ist.

Eine besondere Maßnahme besteht weiter darin, dass der zweite Grundkörperteil oder auch nur das genannte Plattenelement eine Dimension aufweisen, die durch die Länge des wenigstens einen, den Durchflussmesser-Einschubraum ausbildenden Endkanals bestimmt ist. Insbesondere durch diese Ausbildung erreicht man ein raumsparendes Gesamt-Kanalsystem, in dem die Endkanäle eine angepasste Länge aufweisen, nämlich vorzugsweise ca. ein Viertel bis ein Halb der entsprechenden Dimension des Grundkörpers. In solche in ihrer Länge großzügig dimensionierte Endkanäle lässt sich der Durchflussmesser-Einschubraum ausbilden, der in Kanallängsrichtung entsprechend großzügig dimensioniert ist und daher insbesondere auch zur Aufnahme sich relativ lang erstreckender Durchflussmesser ausgebildet und geeignet ist.

Der zweite Grundkörperteil, der von den Kanälen der Kanalanordnung frei bleibt, oder ein Plattenelement können besonders einfach gestaltet werden. Vorzugsweise weist der zweite Grundkörper in einstückiger Ausbildung wenigstens ein eine Plattform bildendes Plattenelement z. B. in Form eines Bodens, einer Platte oder dergleichen Elements auf, an der die Endkanäle ausgebildet sind, wobei das Plattenelement eine Breite aufweist, die der Länge des den Durchflussmesser-Einschubraum ausbildenden Endkanals entspricht. Dadurch wird die Ausbildung der Endkanäle mit wenigstens einem Durchmesser-Einschubraum weiter vereinfacht.

Wie bereits erläutert, kann an dem zweiten Grundkörperteil bzw. dem Plattenelement zur Lagerung des Signalgebers besonders raumgünstig eine Aufnahme ausgebildet sein, die an den Durchflussmesser-Einschubraum angrenzt. In Verbindung damit besteht eine vorteilhafte Gestaltung darin, dass der Durchlauferhitzer eine Leiterplatte umfasst, an der die elektronische Steuereinrichtung angeordnet ist und die der Steuereinrichtung zugehörige elektrische Leiterplattenkontakte aufweist, die räumlich vor dem Signalgeber bzw. der Signalgeber-Aufnahme angeordnet sind, wobei der Signalgeber mit den Leiterplattenkontakten zugeordneten Gegenkontakten ausgestattet ist, die sich in elektrischer Anschluss-Steckverbindung mit den Leiterplattenkontakten befinden. Der Signalgeber kann zweckmäßig an einem in die Signalgeber-Aufnahme steckbaren Träger, z. B. an einer dem Signalgeber zugehörigen Leiterkarte angeordnet sein, an dem die Gegenkontakte ausgebildet sind.

Das Durchflussmesser-Einschubteil und damit der Durchflussmesser können, wie bereits erläutert, besonders kompakt ausgebildet werden. Eine Gestaltungsmöglichkeit besteht darin, dass das Durchflussmesser-Einschubteil durch ein dem Innenquerschnitt des Endkanals angepasstes, mit Wasser durchströmbares Röhrchen gebildet ist.

Der in dem Endkanal befindliche Durchflussmesser kann in jeder Weise derart ausgebildet und Bestandteil einer Messeinrichtung sein, dass er wenigstens ein Element aufweist, das den Durchfluss erfasst und ein mit der Durchflussmenge korrespondierendes Signal abgibt, das berührungslos und kontaktlos durch die Kanalwandung gelangt und an den Signalgeber, der außen am Kanal angeordnet ist, übertragen wird. Ein solcher Signalgeber kann durch jeden geeigneten, ein drahtloses Signal aufnehmende Empfänger gebildet sein.

Bevorzugt wird vorgesehen, dass das Durchflussmesser-Einschubteil und der Signalgeber eine Messeinrichtung bilden, die ein in dem Durchflussmesser-Einschubteil angeordnetes, durch Wasserströmung bewegbares Messelement ausweist und eine mit der Bewegung des Messelements korrespondierende Signalübertragung zwischen dem Messelement und dem äußeren Signalgeber durchführt. Eine an sich bekannte Messeinrichtung umfasst als Messelement eine einen magnetischen Geber bildende Strömungsturbine, ein Schaufelrad oder dergleichen Element; der zugeordnete äußere Signalgeber ist ein Sensor, insbesondere ein Hall-Sensor, der das entsprechend der Bewegung der Turbine beeinflusste bzw. sich ändernde Magnetfeld erfasst.

Erfindungsgemäß kann die Anordnung des Durchflussmesser-Einschubteils entweder in dem einen ersten Endkanal vorgesehen sein, der, einen Wasserzulaufkanal bildend, direkt an eine Wasserleitung bzw. Zapfstelle anschließbar ist, oder in dem anderen (zweiten) Endkanal, der, einen Wasserablaufkanal bildend, direkt an eine Warmwasser abnehmende Leitung bzw. an eine Warmwasserzapfstelle anschließbar ist. Bevorzugt wird man das Durchlaufmesser-Einschubteil in dem Wasserzulaufkanal anordnen, um es im Niedrigtemperaturbereich des Durchlauferhitzers zu betreiben.

Auf die genannten und noch andere zweckmäßige und vorteilhafte Ausgestaltungen der Erfindung sind Unteransprüche gerichtet. Merkmale von Ausgestaltungen und Ausführungsbeispielen tragen in jeder Kombination zur erfindungsgemäßen Lösung bei, so dass diese nicht auf ein konkret beschriebenes Ausführungsbeispiel eingeschränkt ist. Lediglich besonders zweckmäßige und vorteilhafte Ausbildungsformen und -möglichkeiten der Erfindung werden anhand der folgenden Beschreibung der in der schematischen Zeichnung dargestellten Ausführungsbeispiele näher beschreiben. Es zeigen
- Fig. 1: in axonometrischer Teilansicht eines erfindungsgemäßen Durchlauferhitzers eine Wasserleitungs-Anschlussseite, die nach einem Ausführungsbeispiel der Erfindung einen mit einem Durchflussmesser-Einschubteil bestückten, einen Wasserzulauf bildenden Endkanal aufweist,
- Fig. 2: in axonometrischer Teil- und Schnittansicht den Durchlauferhitzer gemäß II-II in Fig. 1,
- Fig. 3: in axonometrischer Teil- und Schnittansicht den Durchlauferhitzer gemäß III-III in Fig. 2 und
- Fig. 4: in axonometrischer Teilansicht eine der Anschlussseite gegenüberliegende Ansicht des Durchlauferhitzers gemäß Fig. 1.

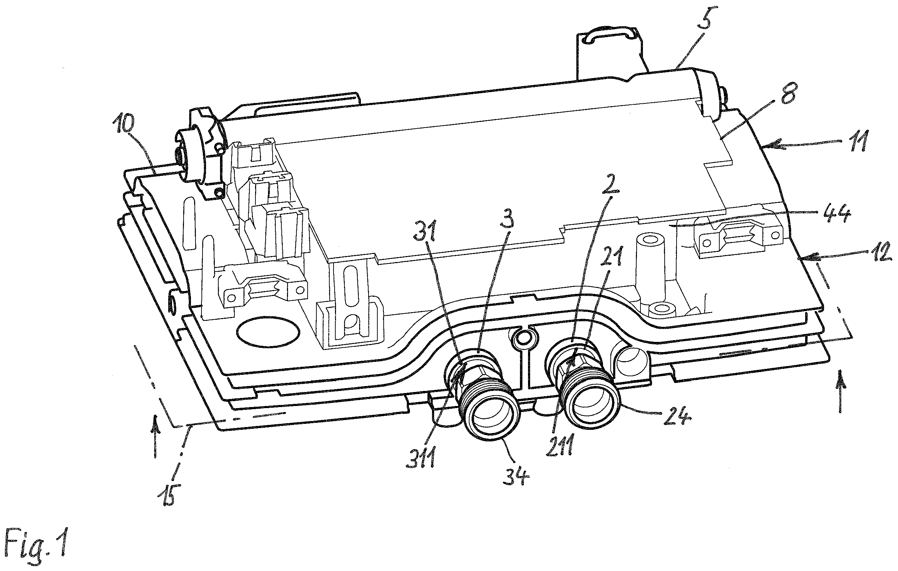

Fig. 1 bis 4 zeigen in Teilansichten wesentliche, ein Ausführungsbeispiel der Erfindung darstellende Teile und Baugruppen eines elektronisch gesteuerten Wasser-Durchlauferhitzers 1. Die Bestückung mit Bauelementen ist teilweise unterschiedlich und unvollständig.

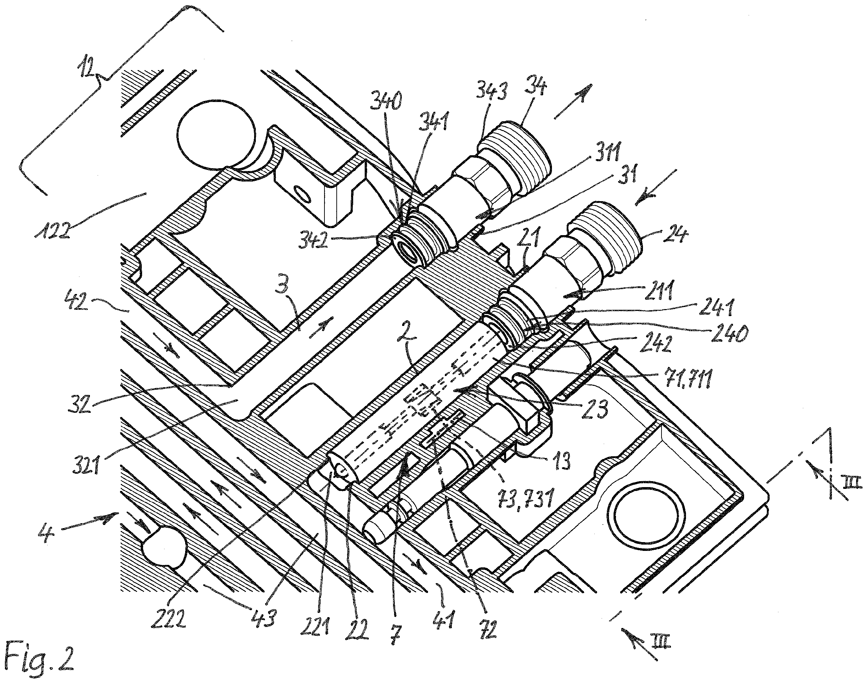

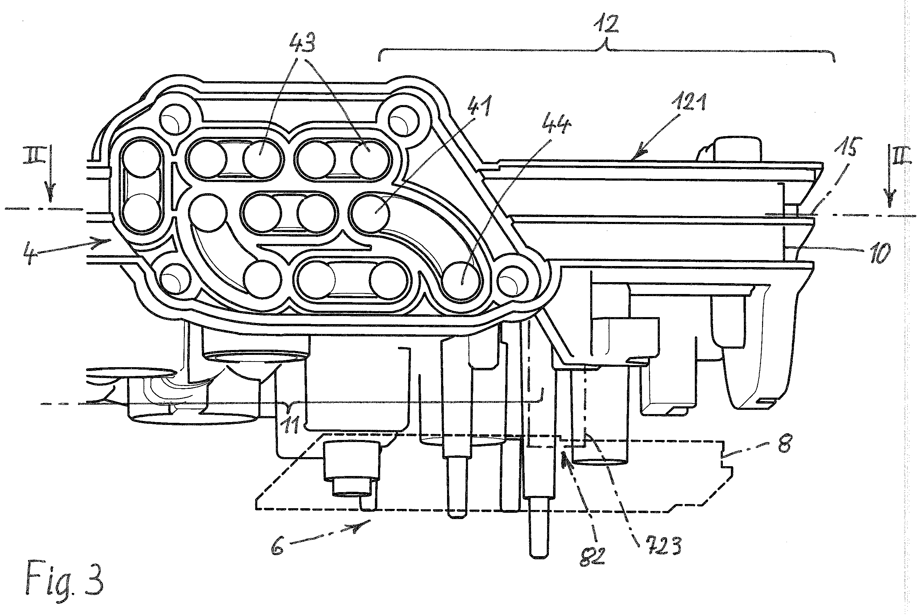

Der Durchlauferhitzer 1 umfasst einen vorzugsweise als Kunststoffspritzteil gefertigten Grundkörper 10, der an einer Basis 140 eines Gehäuses 14 angeordnet und gehalten ist. Der Grundkörper 10 besteht aus vorzugsweise einem einzigen monolithischen Körper. Dieser bildet insbesondere ein Kanalsystem aus, das Endkanäle 2, 3 und eine Kanalanordnung 4 umfasst. Die Kanalanordnung 4 mit Kanälen 41, 42 und 43 ist räumlich von einem Bereich der Endkanäle 2, 3 abgegrenzt und getrennt. Die Kanalanordnung 4 ist mit den Kanälen 41, 42, 43 und 44 in einem Grundkörperteil 11 ausgebildet, das durch eine erste Hälfte des Grundkörpers 10 gebildet ist. Die Kanäle 41, 42, 43 und 44 erstrecken sich in dichter räumlicher Packung parallel und über die Länge des Grundkörpers 10. Kanalkappen oder -deckel, mittels derer jeweils zugehörige Öffnungsenden der Kanäle 41, 42 und 43 druck- und wasserdicht verbunden werden, sind nicht dargestellt. Eine zweite Längshälfte des Grundkörpers 10 bildet ein zweites Grundkörperteil 12. An der in Fig. 2 dargestellten Rück- oder Außenseite des Grundkörpers 10 belegen die Grundkörperteile 11, 12 etwa übereinstimmende Raum- und Flächenbereiche. Lediglich an der Vorder- oder Innenseite des Grundkörpers 10 überlappen die Grundkörperteile 11 und 12 längs des Kanals 44. Die Kanäle 41, 42, 43 und 44 sind nur durch sich längs erstreckende schmale Kanalwände getrennt. Dies geht insbesondere aus Fig. 2 und 3 hervor.

Die Endkanäle 2, 3 sind in dem Grundkörperteil 12 ausgebildet. Die beiden Endkanäle 2, 3 liegen in einer Mittenebene 15 des Grundkörpers 10. In den Darstellungen der Figuren fällt die Schnittebene II-II mit der Mittenebene 15 zusammen. Die Endkanäle 2, 3 verlaufen parallel und sind im Bereich der Längsmitte des Grundkörperteils 12 ausgebildet. Sie sind senkrecht zu den Kanälen 41, 42, 43 und 44 der Kanalanordnung 4 gerichtet. An einem inneren Kanalende 22 geht der Kanal 2 mittels einer Mündung 221 einstückig in den einen Einlaufkanal bildenden Kanal 41 über. Der Endkanal 3 schließt an seinem inneren Kanalende 32 durch eine Mündung 321 an den Kanal 42 an, der einen Auslaufkanal bildet. Bei dem ersten Endkanal 2 handelt es sich um einen Wasserzulaufkanal, und der zweite Endkanal 3 bildet einen Wasserablaufkanal. Die Strömungsrichtung von Wasser in den Endkanälen 2, 3 und in der Kanalanordnung 4 wird in der Zeichnung mit Richtungspfeilen dargestellt.

Jeder Endkanal 2, 3 ist mit einem zugehörigen Leitungsanschlussstück 24 bzw. 34 bestückt. Die Leitungsanschlusstücke 24, 34 sind baugleich. Im Ausführungsbeispiel handelt es sich bei dem Leitungsanschlussstück 24 bzw. 34 um einen Anschlussstutzen mit einem Dichtfuß 242 bzw. 342 und einem Kopfteil 243 bzw. 343. Der Dichtfuß 242, 342 ist in einen entsprechend dem Kreisquerschnitt des Stutzens geweiteten Anschlussabschnitt am äußeren Kanalende 21, 31 eingesetzt. Es ist eine mit O-Dichtungsringen flüssigkeits- und druckdichte, lösbare Anschlussverbindung hergestellt. Das Leitungsanschlussstück 24, 34 kann zum Beispiel in dichtendem Passsitz und/oder in Schraubverbindung eingesetzt sein. Es ragt am Gehäuse 14 nach außen zum Anschluss an eine äußere Kaltwasserleitung bzw. an eine mit Warmwasser zu speisende Leitung hervor. Aus Fig. 2 gehen die erfindungsgemäße Ausbildung und Anordnung eines Durchflussmessers 71 einer Durchflussmesseinrichtung 7 hervor.

Im Ausführungsbeispiel ist die Durchflussmesseinrichtung 7 an dem Endkanal 2 vorgesehen. Wesentliche Bestandteile der Messeinrichtung 7 sind ein Durchflussmesser-Einschubraum 23 in dem Endkanal 2 und ein darin eingesetztes Durchflussmesser-Einschubteil 711. Der Einschubraum 23 weist im Ausführungsbeispiel einen Kanalquerschnitt auf, der zumindest im Wesentlichen gleich dem Querschnitt des Anschlussabschnitts des Endkanals 2 ist. Der den Einschubraum 23 bildende Kanalraum ist durch einen Rand 222 der Mündung 221 sowie durch ein fußseitiges Ende des Dichtfußes 242 des Leitungsanschlussstücks 24 begrenzt.

Das in Fig. 2 dargestellte Durchflussmesser-Einschubteil 711 ist entsprechend der Länge und dem Querschnitt des Einschubraums 23 ausgebildet und formschlüssig in diesen eingesetzt. Es ist zwischen dem Dichtfuß 242 und dem Rand 222 der Kanalmündung 221 gefangen gehalten. Man erkennt, dass das Durchflussmesser-Einschubteil 711 einfach, insbesondere ohne besondere Dichtfläche, Dichtung oder ein eigenes Verschlussmittel ausgeführt ist. Die Montage erfolgt einfach dadurch, dass das Durchflussmesser-Einschubteil 711 durch die am Grundkörper 10 außen gelegene und offene äußere Kanalöffnung 211, nämlich bei noch nicht montiertem oder demontiertem Leitungsanschlussstück 24 in den Endkanal 2 hineingeschoben und in den Sitz in dem Einschubraum 23 gebracht wird. Montage und umgekehrt Demontage sind besonders einfach, da die Dichtverbindung zum Öffnen bzw. Schließen des das Durchflussmesser-Einschubteil 711 aufnehmenden Einschubraums 21 ausschließlich durch die Dichtflächen bzw. die Dichtverbindung 240 des Leitungsanschlussstücks 24 hergestellt wird.

Gemäß dem Ausführungsbeispiel ist es von besonderem Vorteil, dass der Endkanal 2 und damit auch der Endkanal 3 eine Länge aufweisen, die eine großzügige Bemessung der Länge des Einschubraums 23 zwischen dem Leitungsanschlussstück 24 und der Kanalmündung 221 bietet. Dies gelingt dadurch, dass, wie zuvor beschrieben, die Kanalanordnung 4 zumindest im Wesentlichen in der einen Hälfte des Grundkörpers 10, nämlich in dem Grundkörperteil 11 ausgebildet ist, während der Erstreckungsraum der Endkanäle 2, 3 über deren Länge an der der Rückseite des Durchlauferhitzers 1 entsprechenden Grundkörperaußen- oder -rückseite frei von quer verlaufenden Kanälen der Kanalanordnung 4 bleibt (Fig. 2). An der Grundkörpervorderseite kreuzt im Grenzbereich zwischen den Grundkörperteilen 11, 12 nur der Kanal 44. Mit dieser Ausbildung geht einher, dass der Endkanal 2 an einem eine Plattform bildenden Plattenelement 121 des Grundkörperteils 12 angeformt ist und die Erstreckung dieser Plattform längs des Endkanals 2 etwa der halben Breite des Grundkörpers 10 entspricht. Auf gleiche Weise ist der Endkanal 3 einstückig mit einem eine Plattform bildenden Plattenelement 122 ausgebildet, das sich etwa über die Hälfte der Breite des Grundkörpers 10 erstreckt. Die Plattformen können, wie zum Beispiel das Plattenelement 122, zumindest an einer Flächenseite stufig sein. Sie werden vorzugsweise als relativ dünne, plattenartige Wände ausgebildet. Dadurch erhält man im Bereich des Grundkörperteils 12 sowohl an der einen (rückwärtigen) Flächenseite, als auch an der anderen (vorderseitigen) Flächenseite besonderen Bau- und Montageraum. Dieser Raumgewinn ist in Verbindung mit der Anordnung und Ausbildung des Durchflussmesser-Einschubraums 23 dadurch besonders vorteilhaft, dass leicht zugänglich besonderer Montageplatz und -raum für einen Signalgeber 72 der Messeinrichtung 7 ausgebildet ist und zur Verfügung steht. Im Ausführungsbeispiel ist eine Aufnahme 13 in Form einer Tasche vorgesehen, die senkrecht zu dem Plattenelement 121 ausgebildet ist, dieses durchfasst und den Signalgeber 72 aufnimmt. Ein flacher Querschnitt der Tasche erstreckt sich mit dem Endkanal 2 in raumnaher Anordnung an der Wand des Endkanals 2. Der Signalgeber 72 ist nur strichpunktiert schematisch dargestellt (Fig. 2).

Die anhand des Ausführungsbeispiels beschriebene Anordnung und Ausbildung des Durchflussmesser-Einschubraums 23 ist auf die Ausbildung und Kombination mit den beschriebenen Grundkörperteilen 11, 12 und/oder mit wenigstens einem genannten Plattenelement 121, 122 nicht beschränkt. Weiterhin bestehen Ausführungsbeispiele auch darin, den Durchflussmesser-Einschubraum 23 nur oder auch in dem den Wasserablauf bildenden Endkanal 3 auszubilden.

Der Signalgeber 72 gehört zu einer an sich bekannten Messanordnung der Durchflussmesseinrichtung 7. Eine solche Messanordnung umfasst ein magnetisches Drehelement 731 in Form einer Turbine, eines Propellers, eines Flügelrads oder dergleichen, das in einem Strömungsrohr angeordnet ist. Im Ausführungsbeispiel ist das Durchflussmesser-Einschubteil 711 als Röhrchen ausgebildet, in dem das Drehelement 731 angeordnet ist und der Signalgeber 72 ist zum Beispiel ein Hall-Sensor, der durch die Wand des Endkanals 2 hindurch berührungs- und kontaktlos auf die Strömungsmessung durch das sich drehende magnetische Drehelement 731 anspricht und ein Signal an eine elektronische Steuereinrichtung 6 zum Regeln der Temperatur einer Heizeinrichtung 5 abgibt. In an sich bekannter Weise wird so die der Heizeinrichtung 5 zugeführte Wassermenge erfasst und die Temperatur der Heizeinrichtung 5 geregelt.

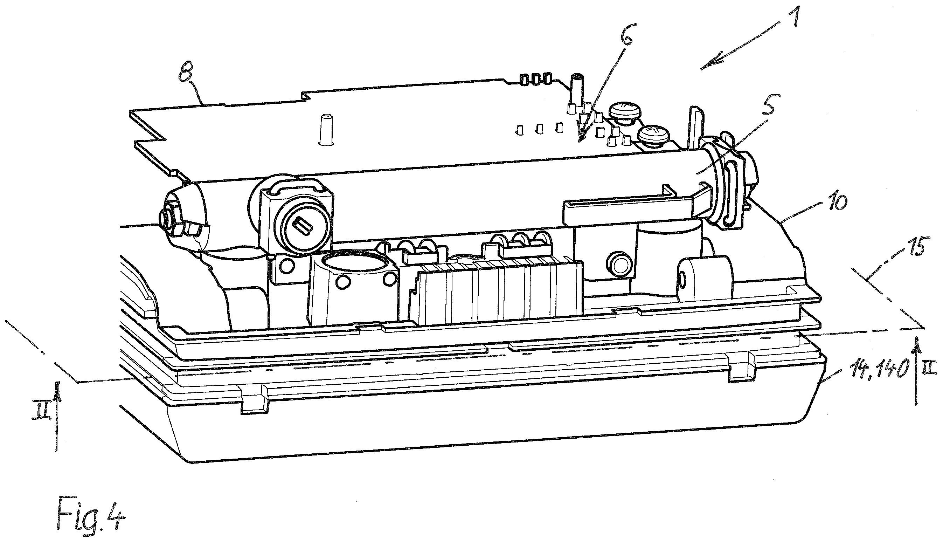

Im Ausführungsbeispiel ist die Heizeinrichtung 5 eine Blankdraht-Heizkartusche, wie sie in Fig. 1 und 4 zu sehen ist. Eine solche Heizkartusche ist der Kanalanordnung 4 zugeordnet und sie ist in das Kanalsystem im Bereich von dessen Wegmitte eingefügt. Die beschriebene bzw. die erfindungsgemäße Anordnung und Ausbildung des Durchflussmessers 71 mit dem Durchflussmesser-Einschubraum 23 sind auf die Kombination mit einer Blankdraht-Heizeinrichtung 5 nicht beschränkt.

Die elektrische Steuereinrichtung 6 ist in der Zeichnung der Fig. 1 bis 4 nicht im Einzelnen zu sehen. Sie befindet sich in dem mit dem Bezugszeichen 6 versehenen Bereich an einer Leiterplatte 8.

Im Ausführungsbeispiel erstreckt sich die Leiterplatte 8, wie dies aus Fig. 1 und 4 ersichtlich ist, an der Vorderseite des Grundkörpers 10 in den Bereich des Grundkörperteils 12 hinein. Die Leiterplatte 8 weist einen Kontaktabschnitt 83 mit Kontakten auf, die in Fig. 2 einer Leiterkarte 723 zugeordnet sind, an der der Hall-Sensor oder ein sonstiger Signalgeber 72 angeordnet ist und die mit den Leiterplatten-Kontakten zugeordneten Gegenkontakten versehen ist. Die Signalgeber-Leiterkarte 723 gehört zu der genannten Taschen-Aufnahme 13. Die Taschen-Aufnahme 13 nimmt die Signalgeber-Leiterkarte 723 in lösbarer Steckverbindung auf. Die Signalgeber-Leiterkarte 723 kann zum Beispiel in der Taschen-Aufnahme 13 verrasten. Der Signalgeber 72 befindet sich dann in mittelbarer räumlicher Nähe zu dem magnetischen Geber, nämlich dem Drehelement 731 des Durchflussmessers 71. Beim Einstecken der Signalgeber-Leiterkarte 723 in die Aufnahme 13 gelangen die Gegenkontakte positionsgenau in Kontaktverbindung mit den Kontakten des Kontaktabschnitts 83 der Leiterplatte 8. Die beschriebene Kontaktverbindung ist auf die Durchflussmesseinrichtung 7 mit dem Drehelement 731 und dem Hall-Sensor nicht beschränkt.

## Patentansprüche

1. Elektrischer Durchlauferhitzer (1), umfassend einen ersten Endkanal (2), nämlich einen Wasserzulaufkanal, mit einem inneren Kanalende (22) und einem in einer ersten äußeren Kanalöffnung (211) mündenden äußeren Kanalende (21), ein erstes Leitungsanschlussstück (24), das in lösbarer Dichtverbindung (240) in der ersten äußeren Kanalöffnung (211), nämlich im Dichtsitz, sitzt und zum Anschluss an eine erste äußere, Wasser zuführende Wasserleitung eingerichtet ist, einen zweiten Endkanal (3), nämlich einen Wasserablaufkanal, mit einem inneren Kanalende (32) und einem in einer zweiten äußeren Kanalöffnung (311) mündenden äußeren Kanalende (31), ein zweites Leitungsanschlussstück (34), das in lösbarer Dichtverbindung (340) in der zweiten äußeren Kanalöffnung (311), nämlich im Dichtsitz, sitzt und zum Anschluss an eine zweite äußere, Wasser aufnehmende Wasserleitung eingerichtet ist, eine Kanalanordnung (4) von wasserführenden Kanälen (41, 42, 43, 44) zwischen den inneren Kanalenden (22, 32) der Endkanäle (2, 3), eine zum Erwärmen von durch die Kanalanordnung (4) fließendem Wasser eingerichtete elektrische Heizeinrichtung (5), eine elektrische Steuereinrichtung (6) zum Regeln der Temperatur der Heizeinrichtung (5) und eine Durchflussmesseinrichtung (7), die eine der Heizeinrichtung (5) zugeführte Wassermenge erfasst und die elektrische Steuereinrichtung (6) mit einem nach Maßgabe der Durchflussmenge bewirkten Durchflusssteuersignal beaufschlagt, wobei die Durchflussmesseinrichtung (7) einen in den Wasserweg der Kanäle eingefügten Durchflussmesser (71) und einen auf den Durchflussmesser (71) berührungs- und kontaktlos ansprechenden, das Durchflusssteuersignal abgebenden Signalgeber (72) umfasst, **dadurch gekennzeichnet, dass** der Durchflussmesser (71) als Durchflussmesser-Einschubteil (711) ausgebildet ist, dass in wenigstens einem der beiden Endkanäle (2, 3) ein Durchflussmesser-Einschubraum (23) ausgebildet ist, der zur vollständigen Aufnahme des Durchflussmesser-Einschubteils (711) eingerichtet ist, wobei das Durchflussmesser-Einschubteil (711) von dem äußeren Kanalende (21) her bei entnommenem Leitungsanschlussstück (24) durch die äußere Kanalöffnung (211) in den Endkanal (2) einführbar ist, und dass das Durchflussmesser-Einschubteil (711) in den Einschubraum (23) in lösbarem Sitz eingefügt ist, wobei es in Reihe mit dem in seinem genannten Dichtsitz befindlichen, aus der äußeren Kanalöffnung (211) entnehmbaren Leitungsanschlussstück (24) angeordnet ist.

2. Durchlauferhitzer nach Anspruch 1, **dadurch gekennzeichnet, dass** das in Reihenanordnung mit dem Durchflussmesser-Einschubteil (711) befindliche Leitungsanschlussstück (24) einen in den zugehörigen Endkanal (2) einfassenden Dichtfuß (242) mit fußseitigem Ende aufweist und dass der Durchflussmesser-Einschubraum (23) durch einen Raum gebildet ist, der in Kanallängsrichtung durch den Rand (222) einer zu dem inneren Kanalende (22) des Endkanals (2) gehörenden Mündung (221) und durch das fußseitige Ende des Dichtfußes (242) begrenzt ist.

3. Durchlauferhitzer nach Anspruch 2, **dadurch gekennzeichnet, dass** die Länge des Durchflussmesser-Einschubraums (23) zwischen dem fußseitigen Ende des Dichtfußes (242) und dem Rand (222) der Mündung (221) entsprechend der Länge des Durchflussmesser-Einschubteils (711) ausgebildet ist.

4. Durchlauferhitzer nach einem der Ansprüche 1 bis 3, **dadurch gekennzeichnet, dass** die den wenigstens einen Durchflussmesser-Einschubraum (23) aufweisenden Endkanäle (2, 3) monolithisch mit den Kanälen (41, 42, 43) der Kanalanordnung (4) in einem monolithischen Grundkörper (10) ausgebildet sind und dass der Grundkörper (10) einen die Kanalanordnung (4) umfassenden ersten Grundkörperteil (11) und einen die Endkanäle (2, 3) mit dem wenigstens einen Durchflussmesser-Einschubraum (23) umfassenden zweiten Grundkörperteil (12) aufweist, wobei mittels der beiden Grundkörperteile (11, 12) der Anordnungsbereich der Kanalanordnung (4) und der Anordnungsbereich der Endkanäle (2, 3) räumlich voneinander getrennt sind.

5. Durchlauferhitzer nach Anspruch 4, **dadurch gekennzeichnet, dass** der zweite Grundkörperteil (12) eine Dimension aufweist, die durch die Länge des wenigstens einen, den Durchflussmesser-Einschubraum (23) ausbildenden Endkanals (2) bestimmt ist.

6. Durchlauferhitzer nach Anspruch 5, **dadurch gekennzeichnet, dass** der zweite Grundkörperteil (12) wenigstens ein Plattenelement (121, 122) aufweist, an dem wenigstens ein Endkanal (2, 3) ausgebildet ist, wobei das Plattenelement (121, 122) eine Breite aufweist, die der Länge des den Durchflussmesser-Einschubraum (23) ausbildenden Endkanals (2) entspricht.

7. Durchlauferhitzer nach einem der Ansprüche 1 bis 6, **dadurch gekennzeichnet, dass** der wenigstens eine den Durchflussmesser-Einschubraum (23) aufweisende Endkanal (2) monolithisch an einem Plattenelement (121) eines Grundkörpers (10) des Durchlauferhitzers (1) geformt ist, wobei zwischen dem Plattenelement (121) und dem Endkanal (2) zumindest im Bereich des Durchflussmesser-Einschubraums (23) freier Montageraum ausgebildet ist.

8. Durchlauferhitzer nach Anspruch 6 oder 7, **dadurch gekennzeichnet, dass** an dem Plattenelement (121) zur Lagerung des Signalgebers (72) eine Aufnahme (13) ausgebildet ist, die an den Durchflussmesser-Einschubraum (23) angrenzt.

9. Durchlauferhitzer nach einem der Ansprüche 1 bis 8, **dadurch gekennzeichnet, dass** der Durchlauferhitzer (1) eine Leiterplatte (8) umfasst, an der die elektronische Steuereinrichtung (6) angeordnet ist und die mit einem Kontaktabschnitt (82), der der Steuereinrichtung (6) zugehörige elektrische Leiterplattenkontakte aufweist, vor dem Signalgeber (72) liegt, der mit den Leiterplattenkontakten zugeordneten Gegenkontakten ausgestattet ist, die sich in elektrischer Anschluss-Steckverbindung mit den Leiterplattenkontakten befinden.

10. Durchlauferhitzer nach einem der Ansprüche 1 bis 9, **dadurch gekennzeichnet, dass** das Durchflussmesser-Einschubteil (711) und der Signalgeber (72) eine Messeinrichtung bilden, die einen in dem Durchflussmesser-Einschubteil (711) angeordneten, durch Wasserströmung bewegbares Messelement (73) aufweist und eine mit der Bewegung des Messelements (73) korrespondierende Signalübertragung zwischen dem Messelement (73) und dem äußeren Signalgeber (72) durchführt.

11. Durchlauferhitzer nach Anspruch 10, **dadurch gekennzeichnet, dass** das Messelement (73) eine Strömungsturbine und der Signalgeber (72) ein Hall-Sensor ist, der ein entsprechend der Bewegung der Strömungsturbine beeinflusstes Magnetfeld erfasst.

12. Durchlauferhitzer nach einem der Ansprüche 1 bis 11, **dadurch gekennzeichnet, dass** das **Durchlaufmesser-Einschubteil** (711) durch ein dem Innenquerschnitt des Endkanals (2) angepasstes, mit Wasser durchströmbares Röhrchen gebildet ist.

13. Durchlauferhitzer nach einem der Ansprüche 1 bis 12, **dadurch gekennzeichnet, dass** das Durchlaufmesser-Einschubteil (711) in dem Wasserzulaufkanal angeordnet ist.

## Claims

1. Electrical continuous-flow heater (1) comprising:
a first end channel (2), namely a water inlet channel with an inner channel end (22) and an outer channel end (21) opening into a first outer channel opening (211), a first pipe connection piece (24) which sits in detachable sealing connection (240) in the first outer channel opening (211), namely in a sealing seat, and is configured for connection to a first outer water pipe supplying water, a second end channel (3), namely a water outlet channel with an inner channel end (32) and an outer channel end (31) opening into a second outer channel opening (311), a second pipe connection piece (34) which sits in detachable sealing connection (340) in the second outer channel opening (311), namely in a sealing seat, and which is configured for connection to a second outer water pipe receiving water, a channel arrangement (4) of water-conducting channels (41, 42, 43, 44) between the inner channel ends (22, 32) of the end channels (2, 3), an electrical heating device (5) configured to heat water flowing through the channel arrangement (4), an electrical control device (6) for controlling the temperature of the heating device (5), and a flow metering device (7) which detects the quantity of water supplied to the heating device (5) and provides the electrical control device (6) with a flow control signal established according to the flow quantity, wherein the flow metering device (7) comprises a flow meter (71) inserted in the water path of the channels, and a sensor (72) emitting the flow control signal and responding to the flow meter (71) contactlessly and without touch, **characterized in that** the flow meter (71) is configured as a flow meter insert part (711), that a flow meter insert space (23) is formed in at least one of the two end channels (2, 3) and is configured to receive completely the flow meter insert part (711), wherein the flow meter insert part (711) is insertable from the outer channel end (21), when the pipe connection piece (24) is removed, through the outer channel opening (211) into the end channel (2), and that the flow meter insert part (711) is inserted by a detachable seat in the insert space (23), wherein it is arranged in series with the pipe connection piece (24) which in its said sealing seat is removable from the outer channel opening (211).

2. Continuous-flow heater according to claim 1, **characterized in that** the pipe connection piece (24) in series arrangement with the flow meter insert part (711) has a sealing foot (242) engaging with a foot-side end in the assigned end channel (2), and that the flow meter insert space (23) is formed by a space which is delimited in the channel longitudinal direction by the edge (222) of an opening (221) belonging to the inner channel end (22) of the end channel (2) and by the foot-side end of the sealing foot (242).

3. Continuous-flow heater according to claim 2, **characterized in that** the length of the flow meter insert space (23) between the foot-side end of the sealing foot (242) and the edge (222) of the opening (221) is configured according to the length of the flow meter insert part (711).

4. Continuous-flow heater according to any one of claims 1 to 3, **characterized in that** the end channels (2, 3) having the at least one flow meter insert space (23) are formed monolithically with the channels (41, 42, 43) of the channel arrangement (4) in a monolithic base body (10), and that the base body (10) has a first base body part (11) comprising the channel arrangement (4) and a second base body part (12) comprising the end channels (2, 3) with the at least one flow meter insert space (23), wherein by means of the two base body parts (11, 12), the region of arrangement of the channel arrangement (4) and the region of arrangement of the end channels (2, 3) are physically separated from each other.

5. Continuous-flow heater according to claim 4, **characterized in that** the second base body part (12) has a dimension which is determined by the length of the at least one end channel (2) forming the flow meter insert space (23).

6. Continuous-flow heater according to claim 5, **characterized in that** the second base body part (12) has at least one plate element (121, 122) on which the at least one end channel (2, 3) is formed, wherein the plate element (121, 122) has a width which corresponds to the length of the end channel (2) forming the flow meter insert space (23).

7. Continuous-flow heater according to any one of claims 1 to 6, **characterized in that** the at least one end channel (2) having the flow meter insert space (23) is formed monolithically on a plate element (121) of a base body (10) of the continuous-flow heater (1), wherein free installation space is formed between the plate element (121) and the end channel (2) at least in the region of the flow meter insert space (23).

8. Continuous-flow heater according to claim 6 or 7, **characterized in that** a receptacle (13) is formed on the plate element (121) for mounting the sensor (72) and adjoins the flow meter insert space (23).

9. Continuous-flow heater according to any one of claims 1 to 8, **characterized in that** the continuous-flow heater (1) comprises a circuit board (8) on which the electronic control device (6) is arranged and which lies in front of the sensor (72) with a contact portion (82) comprising electrical circuit board contacts belonging to the control device (6), which contact portion is equipped with countercontacts assigned to the circuit board contacts and in electrical plug connection with the circuit board contacts.

10. Continuous-flow heater according to any one of claims 1 to 9, **characterized in that** flow meter insert part (711) and the sensor (72) form a measurement device comprising a measurement element (73) which is arranged in the flow meter insert part (711) and is moveable by the water flow, wherein a signal corresponding to the movement of the measurement element (73) is transmitted between the measurement element (73) and the external sensor (72).

11. Continuous-flow heater according to claim 10, **characterized in that** the measurement element (73) is a flow turbine, and the sensor (72) is a Hall sensor which detects a magnetic field influenced according to the movement of the flow turbine.

12. Continuous-flow heater according to any one of claims 1 to 11, **characterized in that** the flow meter insert part (711) is formed by a tube through which water can flow and which is adapted to the inner cross section of the end channel (2).

13. Continuous-flow heater according to any one of claims 1 to 12, **characterized in that** the flow meter insert part (711) is arranged in the water inlet channel.

## Revendications

1. Chauffe-eau instantané électrique (1) comprenant un premier conduit final (2), notamment un conduit d'admission d'eau, avec une extrémité de conduit interne (22) et une extrémité de conduit externe (21) débouchant sur une première ouverture de conduit externe (211), un premier raccordement de canalisation (24) dont le joint d'étanchéité amovible (240) repose dans la première ouverture de conduit externe (211), notamment dans le siège d'étanchéité, et ayant été installé pour permettre un raccordement à une première conduite d'eau externe d'amenée de l'eau, un deuxième conduit final (3) notamment un conduit d'évacuation de l'eau avec une extrémité de conduit interne (32) et une extrémité de conduit externe (31) débouchant sur une deuxième ouverture de conduit externe (311), un deuxième raccordement de canalisation (34) dont le joint d'étanchéité amovible (340) repose dans la deuxième ouverture de conduit externe (311), notamment dans le siège d'étanchéité, et ayant été installé pour permettre un raccordement à une deuxième conduite d'eau externe d'amenée de l'eau, un système de disposition (4) de conduits d'écoulement de l'eau (41, 42, 43, 44) entre les extrémités de conduit interne (22, 32) des conduits finaux (2, 3), un dispositif de chauffage électrique (5) installé pour assurer le chauffage de l'eau s'écoulant dans le système de disposition (4), un dispositif de commande électrique (6) de régulation de la température du dispositif de chauffage (5) et un dispositif de mesure du débit (7) mesurant le volume d'eau amené à l'un des dispositifs de chauffage (5) et émettant un signal de commande de débit à l'attention du dispositif de commande électrique (6) en fonction du débit, dans lequel le dispositif de mesure du débit (7) comprend un débitmètre (71) placé sur le parcours des conduits et un émetteur de signaux (72) sans contact transmettant des signaux de commande de débit et positionné sur le débitmètre (71), **caractérisé en ce que** le débitmètre (71) est conçu de façon à constituer un débitmètre à insérer (711), **en ce qu'**un espace d'insertion du débitmètre (23) a été produit dans au moins l'un des conduits finaux (2, 3) afin d'héberger la totalité du débitmètre à insérer (711), dans lequel le débitmètre à insérer (711) peut être introduit dans le conduit final (2) depuis l'extrémité de conduit externe (21) en passant par l'ouverture de conduit externe (211) après avoir retiré le raccordement de canalisation (24), et **en ce que** le débitmètre à insérer (711) peut être inséré de façon amovible dans l'espace d'insertion (23), en étant aligné par rapport au raccordement de canalisation (24) pouvant être extrait de l'ouverture de conduit externe (211) se trouvant dans ledit siège d'étanchéité.

2. Chauffe-eau instantané selon la revendication 1 **caractérisé en ce que** le raccordement de canalisation (24) aligné par rapport au débitmètre à insérer (711) comprend une base d'étanchéité (242) s'insérant dans un conduit final (2) correspondant avec le côté servant de base et **en ce que** l'espace d'insertion du débitmètre (23) est constitué d'un espace limité dans le sens longitudinal par le bord (222) d'une ouverture (221) appartenant à l'extrémité de conduit interne (22) du conduit final (2), et par le côté servant de base de la base d'étanchéité (242).

3. Chauffe-eau instantané selon la revendication 2 **caractérisé en ce que** la longueur de l'espace d'insertion du débitmètre (23) entre le côté servant de base de la base d'étanchéité (242) et le bord (222) de l'ouverture (221) est conçu en fonction de la longueur du débitmètre à insérer (711).

4. Chauffe-eau instantané selon l'une des revendications 1 à 3 **caractérisé en ce que** les conduits finaux (2, 3) comprenant au moins un espace d'insertion de débitmètre (23) constituent un corps de base (10) monolithique avec les conduits (41, 42, 43) du système de disposition des conduits (4), et **en ce que** le corps de base (10) comprend un premier composant de corps de base (11) englobant le système de de disposition des conduits (4) et un deuxième composant de corps de base (12) englobant les conduits finaux (2, 3) munis d'au moins un espace d'insertion de débitmètre (23), de façon à assurer une séparation spatiale entre la zone de disposition du système de disposition des conduits (4) et la zone de disposition des conduits finaux (2, 3) à l'aide des deux composants du corps de base (11, 12).

5. Chauffe-eau instantané selon la revendication 4 **caractérisé en ce que** la dimension du deuxième composant du corps de base (12) est déterminée par la longueur du ou des conduits finaux (2) formant un des espaces d'insertion du débitmètre (23).

6. Chauffe-eau instantané selon la revendication 5 **caractérisé en ce que** le deuxième composant du corps de base (12) comprend au moins un élément en plaque (121, 122) contre lequel au moins un conduit final (2, 3) est construit, dans lequel la largeur de l'élément en plaque (121, 122) correspond à la longueur du conduit final (2) formant l'espace d'insertion du débitmètre (23).

7. Chauffe-eau instantané selon l'une des revendications 1 à 6 **caractérisé en ce que** le ou les conduits finaux (2) comprenant au moins l'un des espaces d'insertion du débitmètre (23) sont façonnés de façon monolithique sur l'un des éléments en plaque (121) du corps de base (10) du chauffe-eau instantané (1), un espace de montage libre étant formé entre l'élément en plaque (121) et le conduit final (2), au moins au niveau de l'espace d'insertion du débitmètre (23).

8. Chauffe-eau instantané selon la revendication 6 ou 7 **caractérisé en ce qu'**un logement (13) contiguë à l'espace d'insertion du débitmètre (23) a été formé sur l'élément en plaque (121) pour y placer l'émetteur de signaux (72).

9. Chauffe-eau instantané selon l'une des revendications 1 à 8 **caractérisé en ce que** le chauffe-eau instantané (1) comprend un circuit imprimé (8) auquel le dispositif de commande électronique (6) est soumis, et se trouvant avec une partie de contact (82) comprenant les contacts de circuit imprimé électriques correspondants au dispositif de commande (6) devant l'émetteur de signaux (72), muni des contre-contacts assignés aux contacts du circuit imprimé et raccordés électriquement aux contacts du circuit imprimé.

10. Chauffe-eau instantané selon l'une des revendications 1 à 9 **caractérisé en ce que** le débitmètre à insérer (711) et l'émetteur de signaux (72) constituent un dispositif de mesure comprenant un élément de mesure (73) pouvant être déplacé par le flux d'eau placé dans le débitmètre à insérer (711), et assurant la transmission d'un signal correspondant au mouvement de l'élément de mesure (73), de l'élément de mesure (73) à l'émetteur de signaux externe (72).

11. Chauffe-eau instantané selon la revendication 10 **caractérisé en ce que** l'élément de mesure (73) est une turbine hydraulique et l'émetteur de signaux (72) un capteur à effet Hall, mesurant un champ magnétique influencé par les mouvements de la turbine hydraulique.

12. Chauffe-eau instantané selon l'une des revendications 1 à 11 **caractérisé en ce que** le débitmètre à insérer (711) est constitué d'un tube susceptible d'être traversé par de l'eau, adapté en fonction de la section transversale du conduit final (2).

13. Chauffe-eau instantané selon l'une des revendications 1 à 12, **caractérisé en ce que** le débitmètre à insérer (711) est placé dans le conduit d'admission de l'eau.
